# EUROPEAN PATENT SPECIFICATION

(11) **EP 0 827 917 B1**
(45) Date of publication and mention of the grant of the patent: **02.02.2000**
(21) Application number: 96500120.9
(22) Date of filing: 05.09.1996
(51) Int. Cl.: B65G 1/00

(54) **Depalletising machine integrable in an automatic storage system**
Entpalettier-Maschine,integrierbar in einem automatischen Lagersystem
Machine dépalletrice susceptible d'intégration dans un système d'entreposage automatique

(43) Date of publication of application: 11.03.1998
(73) Proprietor: Ulma Manutencion, S. Coop., 20560 Onate (Guipuzcoa) (ES)
(72) Inventor: Bautista Altuna, Unai, 20560 Onate (Guipuzcoa) (ES)
(74) Representative: Carpintero Lopez, Francisco

(56) References cited:
- DE-A- 1 920 979
- GB-A- 1 582 559
- GB-A- 2 187 433
- US-A- 3 123 232
- US-A- 3 946 880

## Description

### SPECIFICATION

### OBJECT OF THE INVENTION

The invention relates to a depalletising machine designed to be integrated in an automatic storage system, especially applicable in places where loads are handled on pallets, and it is therefore especially useful in supermarkets, large shopping centres and any warehouses and premises whatsoever to which generally palletised goods are taken, for their distribution to other areas to be displayed, after rendering the units contained in each pallet independent.

The object of the machine is none other than making the operation to transfer a certain kind of goods or items from a pallet to wheeled trucks or conveyors with which said goods are more easily distributed to storage, display and other areas or places.

### BACKGROUND OF THE INVENTION

Clearly, the vast majority of packaged goods, in tins, containers, boxes holding items of various kinds, sacks, etc. are carried in palletised form, to such an extent that it is frequently necessary, given the type of goods or place of destination thereof, to depalletise or in order words transfer the goods from the pallet to a place where they are stored or displayed, distribution taking place by means of suitable wheeled trucks or conveyors which are obviously loaded with the goods from the receiving pallets.

The palletised goods may form considerably large blocks, namely for instance the classic "tetra-brik" type containers, tins, boxes containing several items at a time, etc.

Said types of goods must be transferred from the place where they are received or stored to the their definitive emplacement, namely for instance display shelves in a retail outlet, by means of wheeled trucks or conveyors, to which end the goods must be depalletised and then transferred onto said trucks or conveyors.

Said transfer is in most cases carried out by hand, which not only requires operators to make a huge physical effort but is moreover a slow and hence costly operation from the economic standpoint.

A solution for solving this problem is known by document US-A-3 946 880 that discloses an apparatus for receiving a stack of articles and successively removing layers from the stack, which apparatus is integrable in an automatic storage system. This apparatus has a body of a prismatic-rectangular shape open at the front, the bottom portion of the apparatus is closed by a bottom plate hinged on one edge and is drivable by means of a hydraulic cylinder arranged laterally to cause the bottom plate to be swung open and closed. The body is mounted on an axis defined by lateral journals arranged at the lower back corners of the sides of the body upon respective propping supports. The body can swing from an upright position in which the loaded pallet is received to a horizontal position in which said load is laid on a plate arranged on the inner face of the rear wall of the body.

### DESCRIPTION OF THE INVENTION

The depalletising machine proposed herein presents such structural and functional characteristics that allow solving of the aforesaid problem, for not only does it allow transfer of the load from a pallet to the corresponding conveying truck, but moreover makes it possible for the machine to be integrable in an automatic storage system, with the operators making a minimal effort, their number being reduced along with the time required for the transfer, with the consequent savings this entails.

Said problem is solved by a machine according to claim 1.

More specifically, the depalletising machine of the invention is based upon the premiss that the load on the pallet is provided in two independent halves, which two halves may be separated as if they were two blocks, each block, i.e. each half, being loadable onto an independent conveying truck.

Structurally, the machine is conventionally composed of a body that may be deemed to be prismatic-rectangular, open at the front and on the top, whereas the base is composed of a plate or lid articulated at one side and capable of swinging driven by a hydraulic cylinder established on one side of the actual body referred to hereinbefore, the above for the purpose described hereinafter.

This body is mounted to swing from front to back and two lateral joints have therefore been provided defining an axis, close to the actual lower back corners of the sides, the axis being capable of turning about respective supports acting as general props, the body being drivable to swing by another hydraulic cylinder provided on each side.

In this way, said body can receive the pallet and its respective load, the latter divided, as explained before, into two halves or blocks, taking up an upright position in order that upon swinging backwards to reach a horizontal position, the load is laid on a support defined by two rectangular plates located right before the rear wall of the body referred to hereinbefore, said rectangular plates being equivalent to the width of the load lying on the pallet that is to be laid inside the body, being particular in that such plates are mounted through bushes upon rear horizontal guides associated to a pair of double effect hydraulic cylinders, and are able to travel sideways and hence move to and from each other, in order that upon separation each may pick up each of the load halves.

According to the characteristics described, the inside of the hollow prismatic body can receive a pallet provided with its relevant load, and swing it back until the load lies upon the rear plates, allowing the pallet to be eliminated after the bottom lid closing the base of the body swings open, the above in order that from such position the two plates on which the load already lies are separated, each with the respective half of the load.

The two conveying trucks are then arranged at said plates, each such truck to receive one of the halves into which the load was divided, the bottom closure lid of the body then being swung, and the body finally swinging up to its original or upright position, the load being thereupon lying on the top surface of the trucks which will thereafter be driven to the area or place of destination of the product.

Furthermore, the depalletising machine has been essentially devised to be arranged in a pit in order that once it is folded, the loading and unloading plane will lie at ground height. If no pit is available at the place of transfer, it is sufficient to provide conveyor belts or roller tracks adjustable in height to suit such height to that required in the pallet loading and unloading operations.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a general schematic perspective view of the depalletising machine subject of the invention, the dash line showing what could be deemed to be the contour of a pit in which said machine is located.

Figure 2.- Is a general perspective of the same machine shown in the preceding figure, with a pallet and its respective load divided into two halves or blocks.

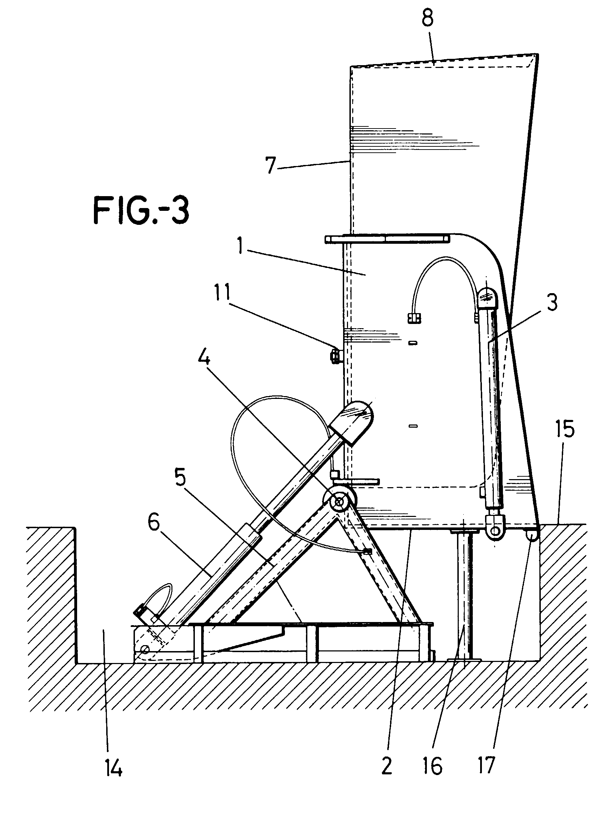

Figure 3.- Is a side elevation view of the machine, duly housed in a pit, its load plane lying at ground height.

Figure 4.- Is another side elevation view of the same machine shown in the preceding figure, in a rearward folded position, in which the assumed load will be supported by the plates located on the inner face of the rear wall of the hollow body of which the machine of the invention is composed.

Figure 5.- Is a rear view of the same machine shown in figure 3.

Figure 6.- Is a machine complemented with a conveyor belt adjustable in height to suit the pallet loading and unloading plane where no pit exists for the machine to be arranged.

Figure 7.- Is an embodiment of a machine integrated in what is deemed to be an automated storage line.

### PREFERRED EMBODIMENT OF THE INVENTION

With reference to the figures, the machine of the invention can be seen to comprise a generally prismatic-rectangular body (1) open at the front and on the top, the base being constituted by a bottom closure plate (2), duly hinged to be able to be swung open by a hydraulic cylinder (3) located on the side of the body (1).

Two horizontally aligned journals (4) are provided near the lower back corners of the sides of the body (1) to determine a hinge axis for the actual body (1), which journals (4) are arranged on respective lateral supports (5) serving as a prop for the entire machine, being particular in that the body (1) is made to swing by one or two lateral hydraulic cylinders (6) arranged in the latter case between each side and the actual base constituting the support (5) for said side.

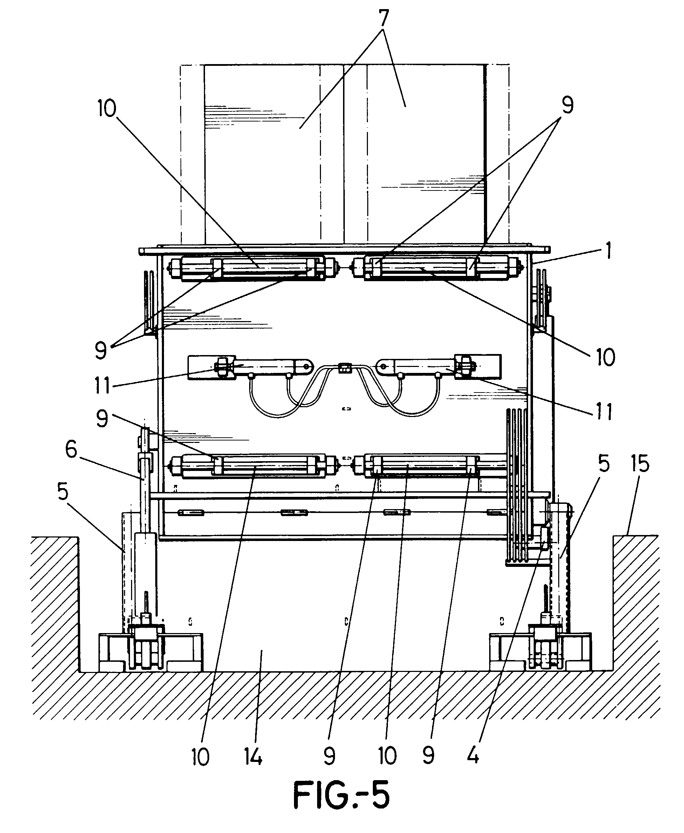

The inner face of the rear wall of the body (1) is provided with a pair of plates (7) that are coplanar with each other, vertically arranged and may be separated, and are complemented with two top horizontal cap-shaped projections (8), being particular in that such plates (7) can travel sideways, moving away from each other, as shown with the dash line of figure 5, or lie facing and in contact with each other through their facing edges. These rear vertical plates (7) travel through bushes (9) connected to the rear face of such plates (7), constituting guide means for respective horizontal stems or rods (10), driving taking place by means of respective hydraulic cylinders (11), as shown in figure 5.

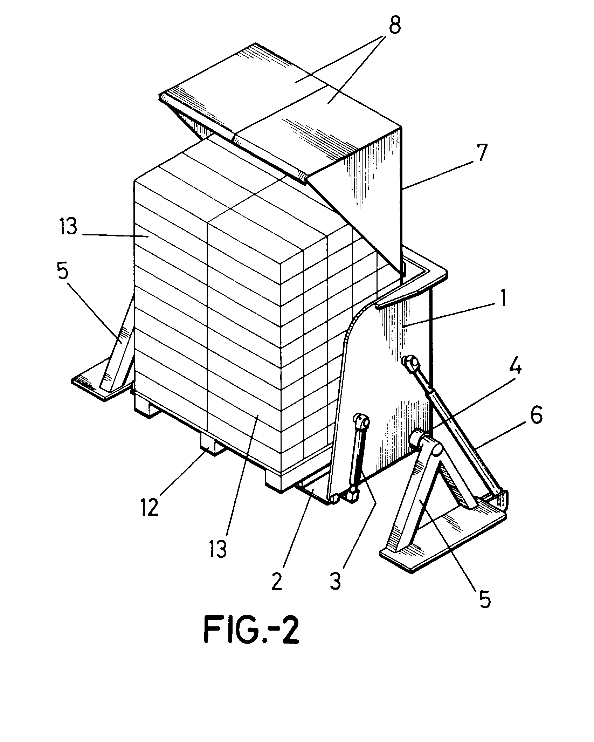

The depalletising machine thus constituted is, as aforesaid, based upon the premiss that a load divided into two halves (13) is established upon any conventional pallet (12), as shown in figure 2, said two halves (13) being laterally arranged adjacent with each other, and may be rendered independent and be independently manipulated.

It is moreover noteworthy that due to the specific situation of the journals (4) constituting the hinge axis of the body (1), the entire machine can be integrated within an automatic pallet loading and unloading system, and be arranged in a pit (14) in order that, once tilted as explained hereinafter, the loading and unloading plane will lie at ground height, which plane corresponds with reference numeral (15) shown in the figures.

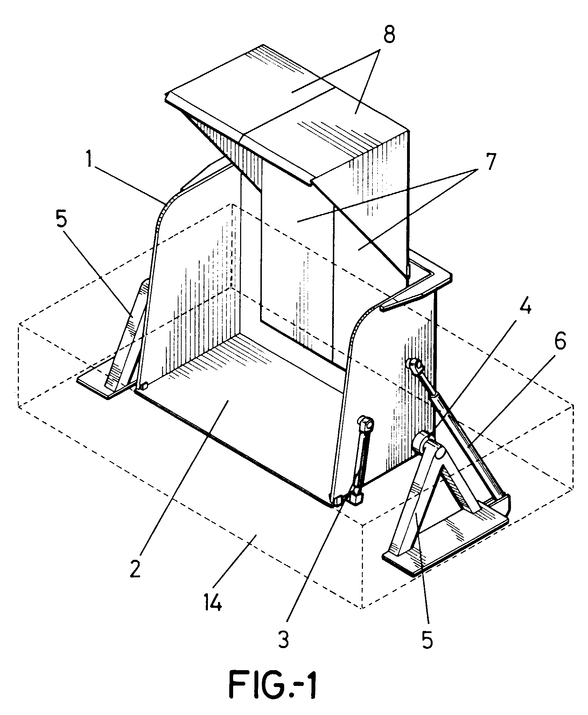

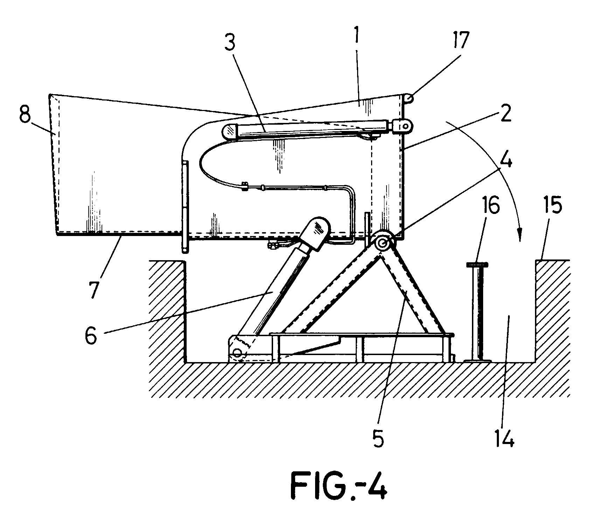

Now, therefore, once the depalletising machine is located in the relevant pit (14), as shown in figures 4 and 5, and even in the dash line of figure 1, the pallet (12) with the respective load divided into two halves (13) is arranged leaning on the bottom closure plate (2), as shown in figure 2, and therefore once this operation has taken place the body (1) is swung backwards to reach the position shown in figure 4, although in this case the machine has no load, in which position and due to such tilting, the load (13) or in other words each of its halves will lie on the plates (7), each of which will be slightly separated by the drive of the rear hydraulic cylinders (10), and therefore each half of the load (13) will be supported on each of said plates (7), the loads being unable to move with respect to the plates (7) due to the stop constituted by the extensions (8).

Next, the bottom closure plate (2) is swung by the hydraulic cylinder (3), in the direction of the arrow shown in figure 4, which swinging will cause an outward tilting until it leans on the top surface of the shore (16) and even on the actual ground plane (15), and since upon being tilted the bottom closure plate (2) might, for instance, rest on the operator's feet, an electric safety band (17) is provided at the edge facing the hinged edge of said bottom closure plate (2), which electric safety band (17) is constituted by a deformable rubber profile which, on the one hand, will not cause serious injuries if it happens to lean on the operator's feet and, on the other hand, if deformed upon any such leaning on the operator's feet, will trigger an alarm signal and even stop the machine or at least the hydraulic cylinder (3) driving said bottom closure plate (2).

Once the bottom closure plate (2) is suitably tilted, the pallet can be manually removed and the respective conveying trucks then be arranged facing in order for each to take half the load (13), i.e. each of the halves arranged on the plates (7) aforesaid.

When the load has been transferred and the bottom plate (2) has been swung back to the closure position, the hydraulic cylinder (6) is actuated to position the body (1) vertically, in order for it to be ready to receive a new loaded pallet and the operative cycle described hereinabove to be repeated.

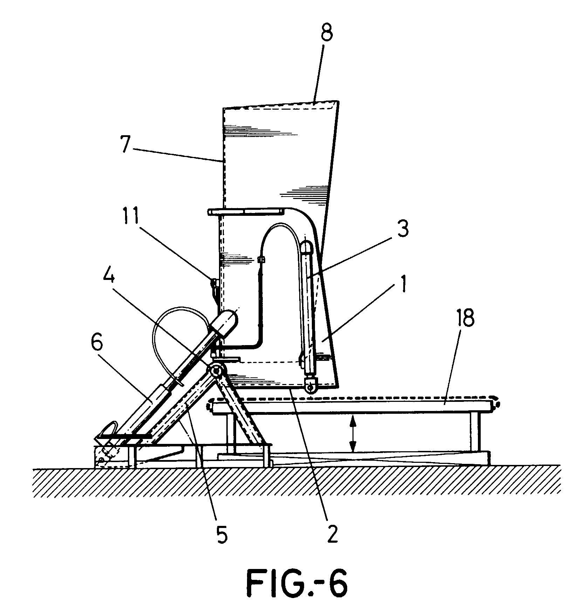

Figure 6 shows a case in which the place of handling has no pit. A conveyor belt (18) of adjustable height is then arranged in order that it may be positioned at the right height for pallets to be loaded and unloaded.

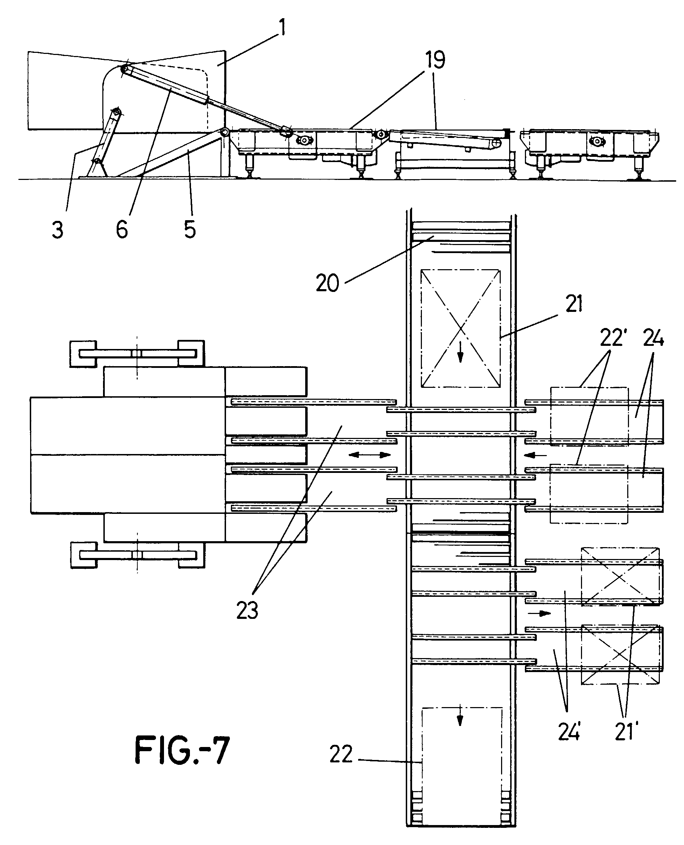

Figure 7 finally shows the machine described integrated in an automated storage line, supports (19) being shown provided with the correspondent transfer means to and from the actual machine described, this unit facing a roller conveying line (20) along which loaded (21) and empty (22) pallets travel, at the entrance to and exit from said roller conveyor (20), entrance and exit tracks (23), and entrance tracks (24) for empty pallets (22') being provided laterally, and exit tracks (24') for loaded pallets (21') being also provided on that lateral portion.

## Claims

1. A depalletising machine integrable in an automatic storage system, especially devised to be used in warehouses, supermarkets and, generally speaking, wherever loaded pallets have to be transferred onto a wheeled truck which shall transfer such load towards a storage or display area, composed of a body (1) that is generally prismatic-rectangular in shape, open at the front and on the top, the bottom or lower portion of said body being closed by a plate or lid (2) hinged on one edge and drivable by means of a hydraulic cylinder (3) arranged laterally to cause said bottom plate (2) to be swung open and closed; the body (1) being mounted upon an axis defined by lateral journals (4) arranged upon respective propping supports (5), the journals (4) being arranged at the lower back corners of the actual sides of the body (1), such body swinging from an upright position in which a loaded (13) pallet (12) is received, down to a horizontal position in which said load (13) is laid on plates (7) arranged on the inner face of a rear wall of the body (1), which plates (7) extend upwardly into horizontal cap-shaped sectors (8) which define stops to prevent the loads (13) from moving when the body (1) swings and these loads (13) are laid on the actual plates (7), characterised in that, the load being divided into two load halves (13), the support plates (7) are defined by two rectangular plates having a width equivalent to the width of the two load halves said plates (7) being able to travel sideways driven by hydraulic cylinders (11) located on the rear portion, travelling taking place guided on horizontal stems or rods (10) passing through bushes (9) connected to the rear face of the actual plates (7) such that separation of plates (7) entails the receipt on each of them of the two halves (13) into which a pallet (12) load is divided, in order to allow each load half to be carried in a different conveying truck.

2. A depalletising machine integrable in an automatic storage system, as in claim 1, characterised in that the bottom closure plate (2), when tilted from the upright position down to the horizontal position, in the position prior to the body (1) being tilted in which the load (13) is supported by the plates (7), is horizontally - supported by the top part of a shore (16) when the entire machine is arranged in a pit (14) whereby the loading and unloading plane lies at ground height (15) at which the bottom closure plate (2) is located when it is folded down to the horizontal position, being particular in that such plate (2) has a deformable rubber profile (17) on its free edge, defining a safety band, the deformation of which carries with it the cutting-off of the power supply to the machine proper.

3. A depalletising machine integrable in an automatic storage system, as in claim 1, characterised in that a conveyor belt (18) of adjustable height is included to be suited to a height allowing the pallets to be loaded and unloaded.

## Patentansprüche

1. Entpalettiermaschine, integrierbar in ein automatisches Lagersystem für den bevorzugten Einsatz in Lagern, Supermärkten und überall dort, wo beladene Paletten auf Wagen umgeladen werden müssen, welche diese Ladung ins Lager oder zum Ausstellungsort befördern, welche aus einem prismatisch-rechteckigen, frontal und oben offenen Körper (1) besteht, dessen Boden oder unterer Bereich durch eine Platte oder Klappe (2) verschlossen wird, die mit Scharnieren an einem der Ränder befestigt ist und über einen seitliche angeordneten Hydraulikzylinder (3) betätigt wird, um die Verschwenkung in Richtung zur Öffnungs- und Verschlusstellung dieser Bodenplatte (2) vorzunehmen, wobei der Körper (1) auf einer von seitlichen Abstützungen (4) gebildeten Achse montiert wird, die auf entsprechenden Halterungen (5) aufliegt, während die Abstützungen (4) entsprechend den unteren hinteren Ecken der Seitenwände des Körpers (1) angeordnet sind, womit die Schwenkbewegung von der vertikalen Stellung zur Aufnahme der Palette (12) mit ihrer Ladung (13) bis zur horizontalen Stellung vorgenommen wird, in welcher die Ladung (13) auf einer der an einer Innenseite der Rückwand des Körpers (1) befestigten Platten (7) aufliegt, die sich im oberen Bereich in horizontalen Abschnitten (8) in Form von Visieren verlängern und Anschläge bilden, um ein Verschieben der Ladungen (13) zu verhindern, wenn sich diese Ladungen (13) während der Schwenkbewegung des Körpers (1) auf den Platten (7) abstützen, dadurch gekennzeichnet, dass die Ladung in zwei Ladehälften (13) geteilt wird und die Stützplatten (7) rechteckige Platten, deren Breite der der beiden Ladehälften entspricht, und in der Lage sind, bei Betätigung der an der Rückseite vorgesehenen Hydraulikzylinder (11) eine Querbewegung durchzuführen, wobei diese Verschiebung mit Hilfe von horizontalen stangen oder Schäften (10) gesteuert wird, welche durch Buchsen (9) dringen, die an der Rückseite der eigentlichen Platten (7) befestigt sind, wodurch die Trennung der Platten (7) dazu führt, dass jede Platte eine der beiden Hälften (13) der geteilten Ladung einer Palette (12) aufnimmt, damit jede Hälfte der Ladung auf verschiedenen Transportwagen befördert werden kann.

2. Entpalettiermaschine, integrierbar in ein automatisches Lagersystem, nach Anspruch 1 dadurch gekennzeichnet, dass die untere Verschlussplatte (2) beim Abklappen aus der vertikalen in die horizontale Stellung, in der Situation vor dem Abklappen des Körpers (1), in der die Ladung (13) von den Platten (7) getragen wird, horizontal auf einer Strebe (16) aufliegt, wenn die Maschine in einem Graben (14) untergebracht ist, wodurch die Lade- und Entladeebene in Höhe des Fussbodens (15) sowie in der Ebene liegt, in welcher sich die untere verschlussplatte (2) beim Abklappen in die horizontale stellung befindet, und zwar mit der Besonderheit, dass diese Platten (2) an ihrem freien Rand ein verformbares Gummiprofil (17) besitzt, das ein Sicherheitsband bildet, dessen Verformung zur Unterbrechung der Stromversorgung der Maschine bewirkt.

3. Entpalettiermaschine, integrierbar in ein automatisches Lagersystem, nach Anspruch 1 dadurch gekennzeichnet, dass ein Transportband (18) vorgesehen ist, dessen Höhe verstellt werden kann, um sie der für die Beladung und Entladung der Paletten erforderlichen Höhe anzupassen.

## Revendications

1. Machine dépalletrice susceptible d'intégration dans un système d'entreposage automatique, spécialement conçue pour être utilisée dans des magasins, des supermarchés et en général dans tout lieu où il est requis d'effectuer un transfert de palettes avec chargement à un chariot roulant chargé de transporter ce chargement vers une zone d'entreposage ou d'exposition, elle est constituée à partir d'un corps (1) à configuration générale prismatique rectangulaire, ouvert sur le devant et supérieurement, le fond ou la partie inférieure de ce corps étant fermé par une plaque ou couvercle (2) biseautée à l'un des bords et qui peut être commandée par un cylindre hydraulique (3) situé latéralement pour effectuer le basculement vers les positions de fermeture et d'ouverture de cette plaque de fond (2) ; le corps (1) est monté sur un axe déterminé par des tourillons latéraux (4) disposés sur les supports correspondants de soutien (5), ces tourillons (4) étant situés en correspondance avec les coins inférieurs postérieurs des côtés du corps (1), celui-ci étant basculant de la position verticale de réception de la palette (12) avec son chargement (13), à une position horizontale où ce chargement (13) est appuyé sur des plaques (7) disposées sur une face interne de la paroi postérieure du corps (1) dont les plaques (7) se prolongent supérieurement en tronçons horizontaux (8) en mode de visière, déterminant ainsi des butées pour empêcher le mouvement des chargements (13) lorsque dans le basculement du corps (1), ces chargements (13) s'appuient sur les plaques (7), caractérisée car le chargement est divisé en deux moitiés de chargement (13), les plaques de support (7) sont définies par deux plaques rectangulaires qui ont une largeur égale à la largeur des deux moitiés de chargement ;ces plaques sont capables de se déplacer transversalement par la commande de cylindres hydrauliques (11) situés sur la partie postérieure, les déplacements étant réalisés de façon guidée sur des baguettes ou tiges horizontales (10) passant par des douilles (9) solidarisées à la face postérieure des plaques (7), de sorte que la séparation des plaques (7) entraîne la réception sur chacune d'elles des deux moitiés (13) qui forment un chargement de la palette (12), en vue de permettre la mise de chaque moitié de chargement sur un chariot de transport différent.

2. Machine dépallettrice susceptible d'intégration dans un système d'entreposage automatique, selon 1^{ère} revendication, caractérisée car la plaque de fermeture inférieure (2) dans son abattement depuis la position verticale à la position horizontale, dans la situation préalable d'abattement du corps (1) où le chargement (13) est supporté par les plaques (7), s'appuie horizontalement sur la partie supérieure d'un support (16), lorsque l'ensemble de la machine est situé sur une fosse (14) faisant que le plan de chargement et de déchargement reste à la hauteur du sol (15), en correspondance avec lequel est située la plaque de fermeture inférieure (2) dans son abattement vers la position horizontale, avec la particularité que cette plaque (2) dispose en son bord libre d'un profilé en caoutchouc déformant (17) déterminant une bande de sécurité dont la déformation entraine l'interruption de l'alimentation électrique de la machine.

3. Machine dépallettrice susceptible d'intégration dans un système d'entreposage automatique, selon 1ère revendication, caractérisée car est inclue une bande transporteuse (18) à hauteur réglable pour l'adapter à la hauteur permettant de réaliser le chargement et le déchargement des palettes.
